(19)

**Europäisches Patentamt**
**European Patent Office**
**Office européen des brevets**

(11) **EP 1 122 214 B1**

(12) **EUROPEAN PATENT SPECIFICATION**

(45) Date of publication and mention of the grant of the patent:
**16.04.2008 Bulletin 2008/16**

(51) Int Cl.:
***C01F 7/30*** (2006.01)

(21) Application number: **01101353.9**

(22) Date of filing: **22.01.2001**

(54) **Process for the production of alumina**

Verfahren zur Herstellung von Aluminiumoxid

Procédé pour la production d'oxide d'aluminium

(84) Designated Contracting States:
**AT BE CH CY DE DK ES FI FR GB GR IE IT LI LU MC NL PT SE TR**

(30) Priority: **04.02.2000 US 180164 P**

(43) Date of publication of application:
**08.08.2001 Bulletin 2001/32**

(73) Proprietor: **Haldor Topsoe A/S**
**2800 Kgs. Lyngby (DK)**

(72) Inventor: **Johansen, Keld**
**3600 Frederikssund (DK)**

(74) Representative: **Wagner, Jutta et al**
**Patentanwälte Zellentin & Partner GbR,**
**Rubensstrasse 30**
**67061 Ludwigshafen/Rhein (DE)**

(56) References cited:
**EP-A- 0 408 240**          **DE-A- 2 113 456**
**US-A- 3 869 543**

- **DATABASE CHEMABS [Online] CHEMICAL ABSTRACTS SERVICE, COLUMBUS, OHIO, US; HUSKA, PAUL A. ET AL: "Apparatus and method for converting aluminum nitrate solutions to.alpha.-alumina" retrieved from STN Database accession no. 84:7154 CA XP002166865 & CA 970 133 A (LITTLE, ARTHUR D., INC., USA) 1 July 1975 (1975-07-01)**

- **KARTHIKEYAN J ET AL: "NANOMATERIAL POWDERS AND DEPOSITS PREPARED BY FLAME SPRAY PROCESSING OF LIQUID PRECURSORS" NANOSTRUCTURED MATERIALS,ELSEVIER, NEW YORK, NY,US, vol. 8, no. 1, 1997, pages 61-74, XP000682993 ISSN: 0965-9773**
- **DATABASE CHEMABS [Online] CHEMICAL ABSTRACTS SERVICE, COLUMBUS, OHIO, US; TARASOVA, T. V. ET AL: "Manufacture of aluminum nitrate" retrieved from STN Database accession no. 111:25825 CA XP002166866 & SU 1 468 863 A (IVANOVO CHEMICAL-TECHNOLOGICAL INSTITUTE, USSR) 30 March 1989 (1989-03-30)**
- **DATABASE CHEMABS [Online] CHEMICAL ABSTRACTS SERVICE, COLUMBUS, OHIO, US; KOSYGINA, T. S. ET AL: "Equilibrium gas phase in the thermal decomposition of an aluminum nitrate solution" retrieved from STN Database accession no. 96:106557 CA XP002166867 & UZB. KHIM. ZH. (1981), (4), 51-5 ,**
- **DATABASE CHEMABS [Online] CHEMICAL ABSTRACTS SERVICE, COLUMBUS, OHIO, US; SHIMAMURA, SHOICHI ET AL: "Manufacture of spherical alumina particles" retrieved from STN Database accession no. 114:209961 CA XP002166868 & JP 03 033011 A (MITSUBISHI MINING AND CEMENT CO., LTD., JAPAN) 13 February 1991 (1991-02-13)**

**Description**

The present invention relates to a process for the production of aluminum hydroxide containing material in particular for use in the preparation of catalyst carriers.

BACKGROUND OF THE INVENTION

The state of the art methods for preparing alumina include use of raw materials produced by precipitation as exemplified by mixing bases such as alkaline aluminate and alkaline hydroxide bases with an acid such as $HNO_3$, $H_2SO_4$ and $H_3PO_4$, in addition to $Al(NO_3)$ and $Al_2(SO_4)_3$. Useful carriers for refinery processing catalysts are produced from alumina and intermediate products like pseudo boehmite owing their large surface area and high porosity.

The known methods for preparing alumina catalyst carriers are costly in terms of purchase of the acid and basic raw materials being employed in the preparation process and, furthermore, expense to pH adjustments, washing steps and wastewater treatment.

"Equilibrium gas phase in the thermal decomposition of an aluminum nitrate solution", Kosygina et al., Uzb. Khim. Zh. (1981), (4), 51-5 describes decomposition of aluminum nitrate solutions and equilibrium partial pressures during this process and $HNO_3$ recovery. However, Kosygina et al. do not mention any raw material for cheap production of pseudo-boehmite.

US 3,647,373 discloses a process for the production of alumina from an aluminum nitrate solution. The solution is introduced to a fluidised bed at 150-300°C where the water vapour content must be controlled The formed aluminum nitrate powder is further processed to metallic aluminum. The nitrate powder is removed from the gas phase in a cyclone and sent to storage before it in a further step is processes to an alumina. Nitrate is recovered by condensation of the vapour from the fluidised bed, however, this requires a proper control of the vapour content in the fluidised bed.

JP 3033011 describes a process, where aluminum salts are dissolved and urea is added, and where these solutions are sprayed through a nozzle into a furnace at very high temperatures in order to form spherical alumina particles. Such salts are expensive as raw materials for industrial production.

US 3,869,543 describes production from aluminum nitrate solutions of alumina for further processing to metallic aluminum. The decomposition takes place between 150°C and 300°C in a fluidised bed, which also is heated by steam in tubes installed in the bed. Aluminum nitrate solution is not cheap, and the intermediate product, alumina, needs no big surface area.

The general object of this invention is, thus, to provide an improved process for the production of alumina such as aluminum oxide and pseudo boehmite for use in the preparation of catalyst carriers, wherein production of alumina is carried out by simplified and in expensive skps. Compared to the known methods, the advantage of the invention includes, furthermore, high product yield through reduced loss of material during the processing.

SUMMARY OF THE INVENTION

The process of this invention comprises the following steps:

a) dissolution of Gibbsite ($Al_2O_3$, $3H_2O$) in nitric acid providing an acid solution of $Al(NO_3)_3$ by reaction (i):

$$Al_2O_3, 3H_2O+6HNO_3 \rightarrow 2\,Al(NO_3)_3+6\,H_2O$$

b) thermal decomposition of the acid solution into aluminum hydroxides and $NO_X$ gases by reaction (ii):

$$2\,Al(NO_2)_3+6H_2O \rightarrow Al_2O_3;\; Z\,H_2O+6\,NO_2+(6\text{-}Z)\,H_2O+3/2\,O_2;$$

and

c) regeneration of $NO_X$ gasses in one or a series of absorption towers to concentrated nitric acid according to reaction (iii):

$$6\,NO_2+3\,H_2O+3/2\,O_2 \rightarrow 6HNO_3$$

The overall reaction, i.e. (i)+(ii)+(iii) is then:

$$Al_2O_3, 3H_2O+3\,H_2O \rightarrow Al_2O_3, Z\,H_2O+(6\text{-}Z)\,H_2O,$$

wherein

$$Z = 0.5-3$$

In a specific embodiment of the invention, $NO_2$ being formed in the above reaction (i) is partly regenerated in absorption towers. Reaction (ii) results in formation of nitric acid that is recycled and utilised for dissolution of Gibbsite, which is the sole raw material in the process.

Though, due to minor loss of the nitric acid to be recycled, occasionally small amounts of nitric acid in addition to what is being currently regenerated have to be added, to maintain or enhance dissolution of the Gibbsite raw material.

Decomposition in the above step (b) may be performed by spraying the acidic solution from step (a) onto the inner surface of one or more rotary kilns with free supply of air at 300-700°C. However, by using this method, measures may be taken in order to prevent sticking of the product to the inner surface of the rotary kiln, e.g. by means of one or more sliding chains. In order to be efficient, the chains must be relatively heavy and are to be present inside each kiln in such a way that they slide down on surface, while the kiln rotates, and thereby prevent the solid material from adhering to the surface.

Adhesion of the prepared material from the decomposed acid solution to the inner side of said kiln may also be prevented by other physical or chemical means known in the art.

The alumina product can be further improved by addition of an organic compound capable of reducing nitrates. Those components can be glucose or similar compounds. The reaction between the organic compound and the nitrate will then generate a faster decomposition of the nitrates through minor local explosions, and, thus, reduce the size of the formed particles.

## Example

Preparation of alumina from aluminium nitrate ($Al(NO_3)_3 \cdot 9H_2O$).

225 g $Al(NO_3)_3 \cdot 9H_2O$) are dissolved in 100 g water and 1 g 65% by weight $HNO_3$. The solution is clear without any remaining crystallites.

The solution is then pumped into a preheated rotating furnace (length 1.5 m inclination 1°), rotating at 30 rpm. The temperature in the furnace is 350°C.

The pumping speed is around 5-20 ml/min. Alumina in its boehmite form starts to form when the solution comes into contact with the walls of the furnace by decomposition of the nitrates.

The formed product is in shape of very porous foam that can easily be grinded to a powder suitable for further processing.

## Claims

1. A process for the production of pseudo-boehmite comprising:

    (a) dissolution of Gibbsite in nitric acid providing an acid solution of aluminum nitrate;
    (b) addition of an organic compound being active in reduction of nitrates to the acid solution;
    (c) decomposition at 300-700°C with free air supply of the acid solution to pseudo-boehmite and NOx by means selected from spraying onto inner surface of one or more rotary kilns, drying in a fluidised bed and drying in a steel band conveyor furnace;
    (d) withdrawing the pseudo-boehmite;
    (e) withdrawing and regeneration of the formed NOx to concentrated nitric acid; and
    (f) recycling of the concentrated nitric acid to the dissolution of step (a).

2. A process according to claim 1, wherein decomposition of the acid solution is conducted at 350°C.

3. A process according to claim 1, wherein the organic compound is glucose.

4. A process according to claim 1, wherein the rotary kiln is equipped with one or more chains of a heavy material, which slides on the inner surface of the kiln, while rotating the kiln.

# EP 1 122 214 B1

**Patentansprüche**

1. Verfahren zur Herstellung von Pseudo-Böhmit umfassend:

   (a) Lösen von Gibbsit in Salpetersäure unter Erhalt einer sauren Aluminiumnitratlösung;
   (b) Zugabe einer Nitrat-reduzierenden organischen Verbindung zu der sauren Lösung;
   (c) Spaltung der sauren Lösung zu Pseudo-Böhmit und $NO_X$ bei 300 - 700°C unter freier Luftzufuhr durch eine Maßnahme ausgewählt aus Aufsprühen auf die innere Oberfläche eines oder mehrerer Drehöfen, Trocknen in einer Wirbelschicht und Trocknen in einem Stahl-Förderband-Ofen;
   (d) Abführen des Pseudo-Böhmits;
   (e) Abführen und Regenerieren des gebildeten $NO_X$ zu konzentrierter Salpetersäure; und
   (f) Rückführen der konzentrierten Salpetersäure in den Lösevorgang in Schritt (a).

2. Verfahren nach Anspruch 1, worin die Spaltung der sauren Lösung bei 350°C durchgeführt wird.

3. Verfahren nach Anspruch 1, worin die organische Verbindung Glukose ist.

4. Verfahren nach Anspruch 1, worin der Drehofen mit einer oder mehreren Ketten aus einem schweren Material ausgestattet ist, welches während der Rotation des Ofens auf der inneren Oberfläche des Ofens gleitet.


**Revendications**

1. Procédé pour la production de pseudo boehmite comprenant :

   (a) la dissolution de gibbsite dans l'acide nitrique procurant une solution acide de nitrate d'aluminium ;
   (b) l'addition d'un composé organique qui est actif dans la réduction des nitrates à la solution acide ;
   (c) la décomposition à 300 à 700°C avec une alimentation d'air libre de la solution d'acide en pseudo boehmite et $NO_X$ par des moyens sélectionnés parmi la pulvérisation sur la surface intérieure d'un ou plusieurs fours rotatifs, le séchage dans un lit fluidisé et le séchage dans un four à transporteur à bande d'acier ;
   (d) le retrait de la pseudo boehmite ;
   (e) le retrait et la régénération du $NO_X$ formé en acide nitrique concentré ; et
   (f) le recyclage de l'acide nitrique concentré vers la dissolution de l'étape (a).

2. Procédé selon la revendication 1, dans lequel la décomposition de la solution acide est conduite à 350°C.

3. Procédé selon la revendication 1, dans lequel le composé organique est le glucose.

4. Procédé selon la revendication 1, dans lequel le four rotatif est équipé avec une ou plusieurs chaînes d'un matériau lourd, lequel coulisse sur la surface intérieure du four, tandis que le four tourne.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3647373 A
- JP 3033011 B
- US 3869543 A

**Non-patent literature cited in the description**

- **KOSYGINA et al.** Equilibrium gas phase in the thermal decomposition of an aluminum nitrate solution. *Uzb. Khim. Zh.,* 1981, vol. 4, 51-5